# EUROPEAN PATENT APPLICATION

(11) **EP 4 443 582 A1**
(43) Date of publication of application: **09.10.2024**
(21) Application number: 21966289.7
(22) Date of filing: 01.12.2021
(51) Int. Cl.: H01M 10/052, H01M 10/0585, H01M 50/262, H01M 50/296, H01M 50/548, H01M 50/55

(54) **SECONDARY BATTERY**

(71) Applicant: NISSAN MOTOR CO., LTD., Kanagawa 221-0023 (JP); Renault SAS, 92100 Boulogne Billancourt (FR)
(72) Inventor: SUZUKI, Yosuke, Atsugi-shi, Kanagawa 243-0123 (JP); KOTAKA, Toshikazu, Atsugi-shi, Kanagawa 243-0123 (JP); AOTANI, Koichiro, Atsugi-shi, Kanagawa 243-0123 (JP)
(74) Representative: Grünecker Patent- und Rechtsanwälte PartG mbB
(86) International application number: PCT/IB2021/000846
(87) International publication number: WO 2023/099931

(57) **Abstract**

A secondary battery is configured by stacking a plurality of battery cells containing a lithium metal or a lithium-containing alloy as a negative electrode active material on a negative electrode layer. The battery cell has a positive electrode tab connected to the positive electrode collector and exposed to the outside, and a negative electrode tab connected to the negative electrode current collector and exposed to the outside. The positive electrode tab and the negative electrode tab are provided on opposite sides of the center line in the thickness direction of the battery cell, and the positive electrode tab and the negative electrode tab of the adjacent battery cells are arranged and connected so as to face each other.

## Description

### TECHNICAL FIELD

The present invention relates to a secondary battery.

### BACKGROUND ART

JP2019-185976A discloses an assembled battery in which a plurality of battery cells (unit cells) are laminated and connected in series using bus bars.

### SUMMARY OF INVENTION

In a case where lithium metal or a lithium-containing alloy is adopted for a negative electrode in JP2019-185976A, the battery cell may expand and contract during charging and discharging. When the battery cell expands and contracts, a stress acts on a connection portion between an electrode of the battery cell and the bus bars. When such a stress acts thereon, performance and reliability may be deteriorated, for example, the connection portion between the electrode of the battery cell and the bus bar may be damaged.

The present invention has been made in view of such technical problems, and an object of the present invention is to provide a secondary battery capable of preventing breakage of a connection portion between adjacent battery cells and suppressing deterioration of performance and reliability of the battery cells even when the battery cells expand and contract during charging and discharging.

According to one embodiment of this invention, a secondary battery comprises a battery module formed by laminating a plurality of battery cells each containing lithium metal or a lithium-containing alloy as a negative electrode active material in a negative electrode layer. The battery cell has a positive electrode tab connected to the positive electrode collector and exposed to the outside, and a negative electrode tab connected to the negative electrode current collector and exposed to the outside. The positive electrode tab and the negative electrode tab are provided on opposite sides of the center line in the thickness direction of the battery cell, and the positive electrode tab and the negative electrode tab of the adjacent battery cells are arranged and connected so as to face each other.

### BRIEF DESCRIPTION OF DRAWINGS

[FIG. 1] FIG. 1 is a top view of an all-solid-state battery according to a first embodiment of the present invention.
[FIG. 2] FIG. 2 is a structural cross-sectional view of a battery cell according to the first embodiment of the present invention.
[FIG. 3] (A) and (B) of FIG. 3 are views comparing before and after expansion of the battery cell according to a comparative example.
[FIG. 4] (A) and (B) of FIG. 4 are views comparing before and after expansion of the battery cell according to the first embodiment of the present invention.
[FIG. 5] FIG. 5 is a structural cross-sectional view of a battery cell according to a modification of the first embodiment of the present invention.
[FIG. 6] FIG. 6 is a side view of an all-solid-state battery according to a second embodiment of the present invention.
[FIG. 7] FIG. 7 is a structural view of a battery cell according to a second embodiment of the present invention.

### DESCRIPTION OF EMBODIMENTS

### <First Embodiment>

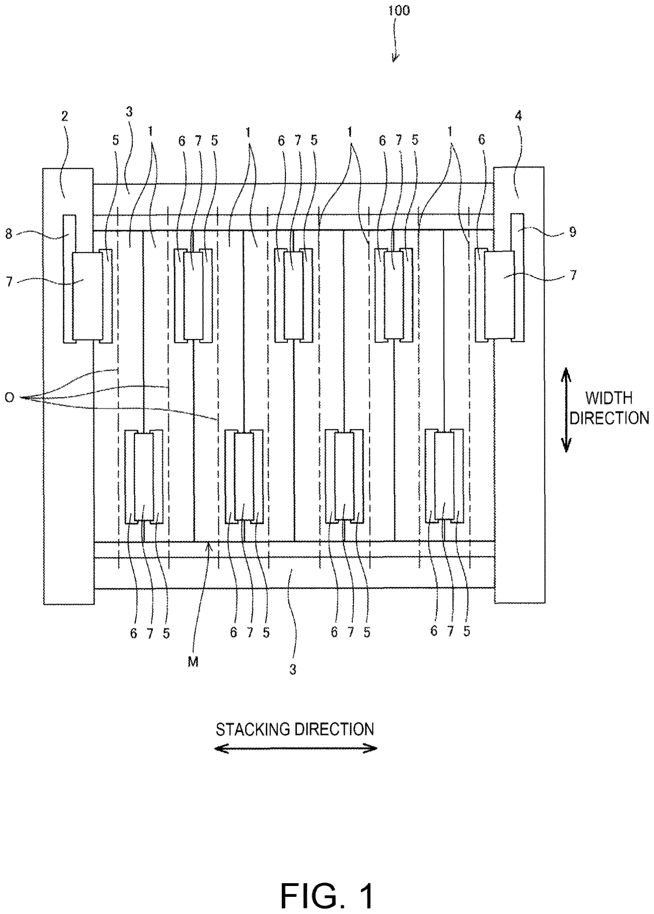

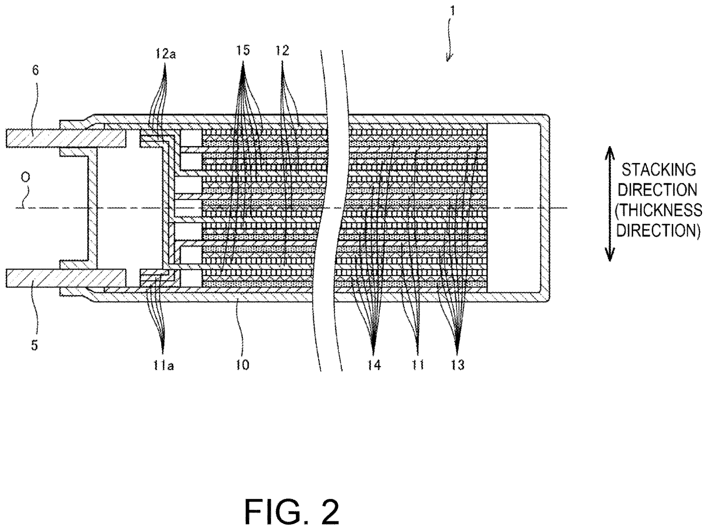

An all-solid-state battery 100 as a secondary battery according to a first embodiment of the present invention will be described with reference to FIGS. 1 and 2. FIG. 1 is a top view of the all-solid-state battery 100 of the first embodiment. FIG. 2 is a structural cross-sectional view of a battery cell 1.

The all-solid-state battery 100 of the present embodiment is a secondary battery that can be charged and discharged a plurality of times. In the following description, the all-solid-state battery 100 is described as an example of the secondary battery, but as long as a battery is configured by laminating a plurality of battery cells each containing lithium metal or a lithium-containing alloy as a negative electrode active material in a negative electrode layer, a semi-solid-state battery or a battery using an organic solvent (electrolyte solution) as an electrolyte may be used. As shown in FIG. 1, the all-solid-state battery 100 includes: a plurality of battery modules M that are provided in a housing (not shown) and are configured by laminating a plurality of battery cells 1; a first plate 2 which is unmovable and to which one end of the battery module M in a laminating direction of the battery cells 1 is fixed; guide rods 3 having one end fixed to the first plate 2 and extending in the laminating direction of the battery cells 1; a second plate 4 to which the other end of the battery module M in the laminating direction of the battery cells 1 is fixed, and which is movable in accordance with the battery cells 1 when the battery cells 1 expand and contract; a first terminal 8 that is attached to the first plate 2 and is electrically connected to an external device (not shown); and a second terminal 9 that is attached to the second plate 4 and is electrically connected to the external device.

The battery module M is fixed in the housing (not shown) by fixing the first plate 2 to the housing. The plurality of laminated battery cells 1 are held in a pressurized state by a band (not shown) having elasticity or the like in a state of being laminated between the first plate 2 and the second plate 4.

For example, four guide rods 3 are provided to support the second plate 4 movably in the laminating direction of the battery cells 1.

Next, a specific structure of the battery cell 1 will be described with reference to FIG. 2.

The battery cell 1 of the present embodiment is formed in a substantially rectangular shape in plan view (see FIG. 1). An electrode structure of the battery cell 1 shown in FIG. 2 is of a so-called non-bipolar type (internal parallel connection type), but may be of a bipolar type (internal series connection type). In addition, a shape of the battery cell 1 is not limited to the rectangular shape, and may be any shape such as a circular shape or an elliptical shape.

The battery cell 1 includes: a positive electrode current collector 11 and a negative electrode current collector 12 that are alternately laminated; a power generation element unit provided between the positive electrode current collector 11 and the negative electrode current collector 12 that are adjacent to each other in the laminating direction; and a laminate material 10 that is a battery exterior material covering the positive electrode current collector 11, the negative electrode current collector 12, and the power generation element unit. The power generation element unit includes: a positive electrode layer 13; a solid electrolyte layer 14; and a negative electrode layer 15.

As shown in FIG. 2, the battery cell 1 is configured by laminating a plurality of laminated structures in which the positive electrode current collector 11, the positive electrode layer 13, the solid electrolyte layer 14, the negative electrode layer 15, and the negative electrode current collector 12 are laminated.

The positive electrode current collector 11 and the negative electrode current collector 12 are formed in a rectangular thin plate shape from a metal material such as aluminum, nickel, iron, stainless steel, titanium, and copper. The positive electrode current collector 11 and the negative electrode current collector 12 respectively include flexible extraction electrodes 11a and 12a extending from one side forming an outer edge. The extraction electrodes 11a and 12a are provided to protrude in a same direction in a direction (height direction when the extraction electrodes 11a and 12a are oriented in a vertical direction) perpendicular to the laminating direction of the battery cells 1. A positive electrode tab 5 and a negative electrode tab 6 serving as rigid terminals are attached to tips of the extraction electrodes 11a and 12a, respectively. Accordingly, the positive electrode tab 5 and the negative electrode tab 6 are provided to protrude in the same direction in the direction perpendicular to the laminating direction of the battery cells 1.

The positive electrode layer 13 is disposed on both main surfaces of the positive electrode current collector 11 (only a main surface of the positive electrode current collector 11 facing the negative electrode current collector 12 in a case of an end portion). The positive electrode layer 13 is formed to contain, as a positive electrode active material, a substance that can release lithium ions during charging by utilizing an oxidation-reduction reaction, and absorb the lithium ions during discharging. Examples of a material of the positive electrode active material include lithium-transition metal composite oxides such as LiMn₂O₄, LiCoO₂, LiNiO₂, Li(Ni-Mn-Co)O₂, and those in which a part of a transition metal of LiMn₂O₄, LiCoO₂, LiNiO₂, Li(Ni-Mn-Co)O₂ is substituted with another element; lithium-transition metal phosphate compounds; and lithium-transition metal sulfate compounds.

The solid electrolyte layer 14 is a layer containing a solid electrolyte as a main component and interposed between the positive electrode layer 13 and the negative electrode layer 15. Examples of a material of the solid electrolyte include a sulfide solid electrolyte and an oxide solid electrolyte, and is preferably a sulfide solid electrolyte. As the sulfide solid electrolyte, for example, an LPS-based material (for example, argyrodite (Li6PS5Cl)) or an LGPS-based material (for example, Li10GeP2S12) is suitable.

The negative electrode layer 15 is disposed on both main surfaces of the negative electrode current collector 12 (only a surface of the negative electrode current collector 12 facing the positive electrode current collector 11 in a case of an end portion). The negative electrode layer 15 is formed to contain at least lithium metal or a substance forming an alloy with lithium as a negative electrode active material. The case where the negative electrode layer 15 contains lithium metal as the negative electrode active material includes a case where a lithium metal foil or lithium metal particles are disposed on the main surface of the negative electrode current collector 12, and a case where lithium metal is deposited on the main surface of the negative electrode current collector 12 using a positive electrode containing a positive electrode active material such as a lithium-transition metal composite oxide, a lithium-transition metal phosphate compound, and a lithium-transition metal sulfate compound. In addition, the case where the negative electrode layer 15 contains a substance forming an alloy with lithium as an active material means that the negative electrode layer 15 contains at least one substance of In, Al, Si, and Sn.

As shown in FIG. 2, in the battery cell 1 of the present embodiment, an extraction electrode 1 1a of a positive electrode current collector 11 located on an outermost side in a thickness direction is provided on the same plane as a main body portion of the extraction electrode 11a, and the positive electrode tab 5 is connected to a tip portion thereof. In addition, an extraction electrode 11a of another positive electrode current collector 11 is bent toward and connected to the extraction electrode 1 1a of the positive electrode current collector 11 located on the outermost side. An extraction electrode 12a of a negative electrode current collector 12 located on the outermost side in the thickness direction is provided on the same plane as a main body portion of the extraction electrode 12a, and the positive electrode tab 5 is connected to a tip portion thereof. In addition, an extraction electrode 12a of another negative electrode current collector 12 is bent toward and connected to the extraction electrode 12a of the negative electrode current collector 12 located on the outermost side.

Next, disposition and connection of the positive electrode tab 5 and the negative electrode tab 6 will be described.

As shown in FIGS. 1 and 2, in the all-solid-state battery 100 (battery module M), the positive electrode tab 5 and the negative electrode tab 6 are provided on opposite sides across a center line O in the thickness direction of the battery cell 1. In addition, the positive electrode tab 5 and the negative electrode tab 6 are disposed to be shifted in a width direction of the battery cell 1 (see FIG. 1). As described above, by connecting the positive electrode tab 5 and the negative electrode tab 6 to the positive electrode current collector 11 and the negative electrode current collector 12 located on the outermost side, the positive electrode tab 5 and the negative electrode tab 6 can be provided at positions close to an end surface in the thickness direction of the battery cell 1.

As shown in FIG. 1, in the all-solid-state battery 100 (battery module M), the positive electrode tab 5 and the negative electrode tab 6 of the adjacent battery cells 1 are disposed to face each other, and are electrically connected to each other via a bus bar 7. The positive electrode tab 5 and the bus bar 7, and the negative electrode tab 6 and the bus bar 7 are respectively connected by welding or the like. In this manner, by connecting the positive electrode tab 5 and the negative electrode tab 6 of the adjacent battery cells 1, the plurality of battery cells 1 are electrically connected in series. The positive electrode tab 5 and the negative electrode tab 6 located at both ends of the laminated battery cells 1 are disposed so as to face the first terminal 8 provided on the first plate 2 and the second terminal 9 provided on the second plate 4, respectively, and are electrically connected to the first terminal 8 and the second terminal 9 via the bus bars 7.

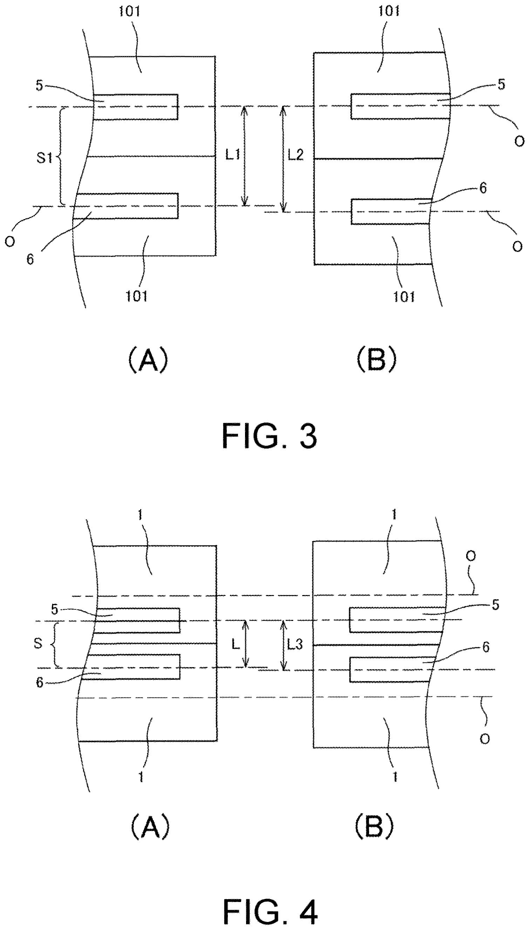

In the all-solid-state battery 100, since the negative electrode active material is configured by containing at least the lithium metal or the substance forming an alloy with lithium, the battery cell 1 expands and contracts in the laminating direction in accordance with absorbing and discharge of lithium ions during charging and discharging. Here, with reference to FIGS. 3 and 4, changes in a distance between the positive electrode tab 5 and the negative electrode tab 6 of the adjacent battery cells 1 when the battery cells 1 expand will be described. (A) of FIG. 3 shows a battery cell 101 before expansion in a comparative example, and (B) of FIG. 3 shows the battery cell 101 after expansion in the comparative example. In addition, (A) of FIG. 4 shows the battery cell 1 before the battery cell 1 in the present embodiment expands, and (B) of FIG. 4 shows the battery cell 1 after expansion in the present embodiment. In (A) and (B) of FIG. 3 and (A) and (B) of FIG. 4, the bus bar 7 is not shown for the sake of illustration.

As in the battery cell 101 which is the comparative example shown in (A) and (B) of FIG. 3, when the positive electrode tab 5 and the negative electrode tab 6 are provided on the center line O in the thickness direction of the battery cell 101, the distance between the positive electrode tab 5 and the negative electrode tab 6 increases from L1 to L2 when the battery cell 1 expands due to charging. A difference between the distances L1 and L2 corresponds to an amount of expansion in a region S1 between the positive electrode tab 5 and the negative electrode tab 6 in the adjacent battery cells 1.

In the all-solid-state battery 100 (battery module M) of the present embodiment, as described above, the positive electrode tab 5 and the negative electrode tab 6 are provided on opposite sides across the center line O in the thickness direction of the battery cell 1, and are disposed to face each other. Accordingly, as shown in (A) and (B) of FIG. 4, since a distance L (region S) between the positive electrode tab 5 and the negative electrode tab 6 in the adjacent battery cells 1 can be shortened, a change amount (distance L3 - distance L) of the distance between the positive electrode tab 5 and the negative electrode tab 6 can be reduced when the battery cell 1 expands.

Therefore, in the battery module M, as shown in FIG. 1, the positive electrode tab 5 and the negative electrode tab 6 are provided on opposite sides across the center line O in the thickness direction of the battery cell 1, and the positive electrode tab 5 and the negative electrode tab 6 of the adjacent battery cells 1 are laminated to face each other. Accordingly, when the battery cell 1 expands and contracts, the change amount of the distance L between the positive electrode tab 5 and the negative electrode tab 6 can be reduced, and thus a stress acting on a connection portion between the positive electrode tab 5 and the negative electrode tab 6 due to the expansion and contraction can be reduced. Therefore, according to the all-solid-state battery 100 of the present embodiment, breakage of the connection portion between the positive electrode tab 5 and the negative electrode tab 6 of the adjacent battery cells 1 can be prevented. Accordingly, deterioration of performance and reliability of the all-solid-state battery 100 can be suppressed.

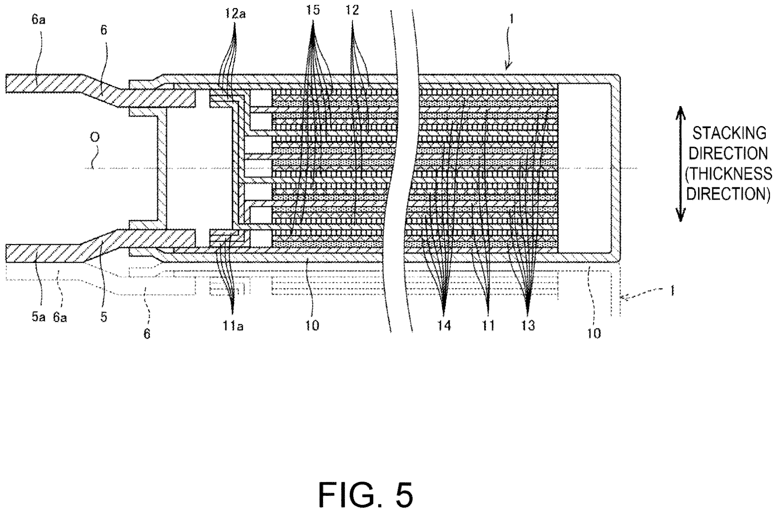

In the above-mentioned embodiment, the positive electrode tab 5 and the negative electrode tab 6 are connected to each other via the bus bar 7, but the bus bar 7 is not necessarily provided. Specifically, as shown in FIG. 5, the positive electrode tab 5 and the negative electrode tab 6 may be formed by being bent such that connection portions 5a and 6a of the positive electrode tab 5 and the negative electrode tab 6 are respectively located at the end surface in the laminating direction of the battery cells 1. Accordingly, the connection portion 5a of the positive electrode tab 5 and the connection portion 6a of the negative electrode tab 6 of the adjacent battery cells 1 can be directly connected. Accordingly, since the bus bar 7 is not necessarily provided, the cost can be reduced, and connection portions due to welding and the like can be reduced, and thus the performance and reliability of the all-solid-state battery 100 (battery module M) can be improved.

According to the all-solid-state battery 100 according to the first embodiment described above, the following effects are exhibited.

In the all-solid-state battery 100, the positive electrode tab 5 and the negative electrode tab 6 are provided on opposite sides across the center line O in the thickness direction of the battery cell 1. Further, the positive electrode tab 5 and the negative electrode tab 6 of the adjacent battery cells 1 are disposed to face each other and connected to each other. Accordingly, when the battery cell 1 expands, the change amount of the distance between the positive electrode tab 5 and the negative electrode tab 6 can be reduced, and thus the stress acting on the connection portion between the positive electrode tab 5 and the negative electrode tab 6 of the battery cell 1 can be reduced. Accordingly, the breakage of the connection portion between the positive electrode tab 5 and the negative electrode tab 6 can be prevented, and the deterioration of the performance and reliability of the all-solid-state battery 100 can be prevented.

In addition, in the all-solid-state battery 100, the positive electrode tab 5 and the negative electrode tab 6 are provided to protrude in the same direction in a direction perpendicular to the laminating direction of the battery cells 1. Accordingly, electrical connection portions are concentrated on one surface of the all-solid-state battery 100, thereby facilitating wiring work and maintenance.

In the all-solid-state battery 100, the positive electrode tab 5 and the negative electrode tab 6 located at both ends of the battery module M are electrically connected to the first terminal 8 provided on the first plate 2 and the second terminal 9 provided on the second plate 4, respectively, via the bus bars 7. For example, in a case where the positive electrode tab 5 or the negative electrode tab 6 of the battery cell 1 located closest to a second plate 4 side is connected to the second terminal 9 provided on the first plate 2, the change amount due to expansion and contraction of all the laminated battery cells 1 acts on the connection portions therebetween. Therefore, by connecting the positive electrode tab 5 or the negative electrode tab 6 located on an end portion of the second plate 4 side of the battery module M to the second terminal 9 provided on the second plate 4, it is possible to reduce the change amount of the distance L between the second terminal 9 and the negative electrode tab 6 connected to the second terminal 9 when the battery cell 1 expands. Accordingly, a stress acting on a connection portion between the second terminal 9 and the negative electrode tab 6 connected to the second terminal 9 can be reduced. Therefore, breakage of the connection portion between the second terminal 9 and the negative electrode tab 6 connected to the second terminal 9 can be prevented.

### <Second Embodiment>

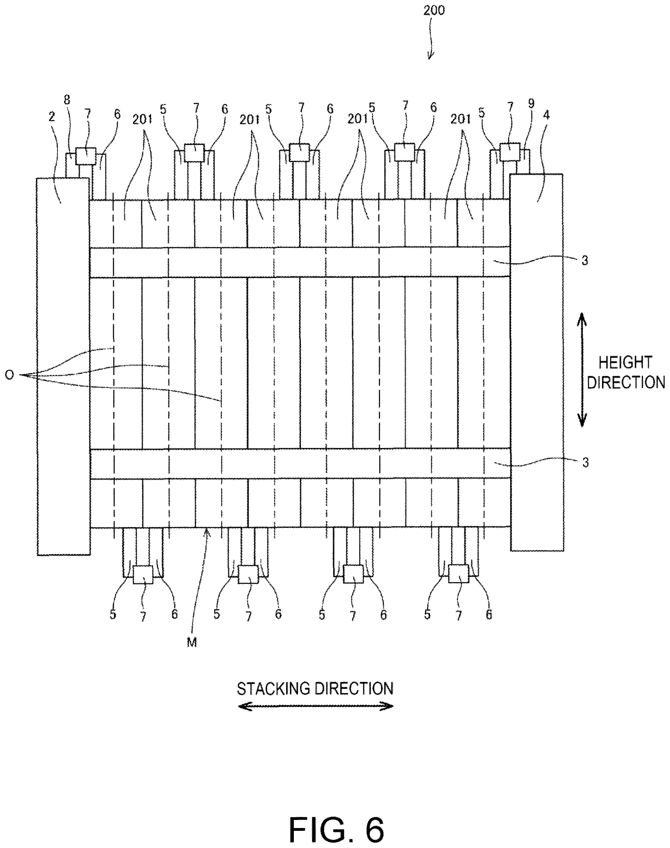

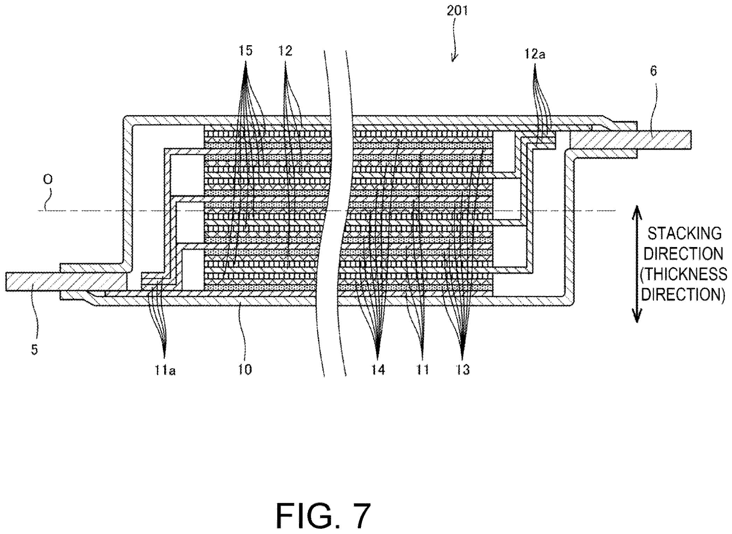

Next, an all-solid-state battery 200 as a secondary battery according to a second embodiment of the present invention will be described with reference to FIGS. 6 and 7. Hereinafter, differences of the above-mentioned second embodiment from the all-solid-state battery 100 will be mainly described, and the same components as those of the all-solid-state battery 100 of the first embodiment are denoted by the same reference numerals, and description thereof will be omitted.

FIG. 6 is a side view of the all-solid-state battery 200 according to the second embodiment. FIG. 7 is a structural cross-sectional view of a battery cell 201 according to the second embodiment. The first embodiment and the second embodiment are different in that in the battery cell 1 according to the first embodiment, the positive electrode tab 5 and the negative electrode tab 6 are provided to protrude in the same direction in the direction orthogonal to the laminating direction of the battery cells 1, whereas in the battery cell 201 according to the second embodiment, the positive electrode tab 5 and the negative electrode tab 6 are provided to protrude in opposite directions in the direction orthogonal to the laminating direction of the battery cells 1.

As shown in FIGS. 6 and 7, in the battery cell 201, the positive electrode tab 5 and the negative electrode tab 6 are also provided on opposite sides across the center line O in the thickness direction of the battery cell 1. In the battery cell 201, the positive electrode tab 5 and the negative electrode tab 6 are provided so as to protrude in directions opposite to each other in the direction orthogonal to the laminating direction.

As shown in FIG. 7, in the battery cell 201 of the present embodiment, the extraction electrode 11a of the positive electrode current collector 11 located on the outermost side is also provided on the same plane as the main body portion of the extraction electrode 11a, and the positive electrode tab 5 is also connected to the tip portion thereof. In addition, the extraction electrode 11a of another positive electrode current collector 11 is bent toward and connected to the extraction electrode 11a of the positive electrode current collector 11 located on the outermost side. The extraction electrode 12a of the negative electrode current collector 12 located on the outermost side is provided on the same plane as the main body portion of the extraction electrode 12a, and the negative electrode tab 6 is connected to the tip portion thereof. In addition, the extraction electrode 12a of another negative electrode current collector 12 is bent toward and connected to the extraction electrode 12a of the negative electrode current collector 12 located on the outermost side.

As shown in FIG. 6, in the all-solid-state battery 200 (battery module M), the positive electrode tab 5 and the negative electrode tab 6 of the adjacent battery cells 201 are disposed to face each other, and are electrically connected via the bus bar 7. The positive electrode tab 5 and the bus bar 7, and the negative electrode tab 6 and the bus bar 7 are respectively connected by welding or the like. In this manner, by connecting the positive electrode tab 5 and the negative electrode tab 6 of the adjacent battery cells 201, the plurality of battery cells 201 are electrically connected in series. The positive electrode tab 5 and the negative electrode tab 6 located at both ends of the laminated battery cells 201 are disposed so as to face the first terminal 8 provided on the first plate 2 and the second terminal 9 provided on the second plate 4, respectively, and are electrically connected to the first terminal 8 and the second terminal 9 via the bus bars 7.

According to the all-solid-state battery 200 according to the second embodiment described above, in addition to operations and effects of the all-solid-state battery 100 according to the first embodiment, for example, in a case where the positive electrode tab 5 and the negative electrode tab 6 are provided at a center in a width direction of the battery cell 1 or 201, a distance between connection portions of the positive electrode tab 5 and the negative electrode tab 6 can be made longer than that of the all-solid-state battery 100 according to the first embodiment, thereby exhibiting an effect that an insulating property can be more reliably secured.

In the above-mentioned embodiments, the all-solid-state batteries 100 and 200 are described as examples, but the present invention is not limited thereto, and any type of battery can be applied as long as the battery has a battery cell expanding and contracting in accordance with charging and discharging, specifically, a battery cell containing lithium metal or a lithium-containing alloy as a negative electrode active material in a negative electrode layer, such as a semi-solid-state battery.

In addition, in the above-mentioned embodiments, an example in which the negative electrode layer 15 is always present has been described, but the present invention is not limited thereto, and the negative electrode layer 15 may be formed as a precipitated layer on a surface of the negative electrode current collector 12 facing the positive electrode current collector 11 when the battery cell 1 or 201 is charged, and may disappear when the battery cell 1 is discharged. Further, a bipolar all-solid-state battery or a semi-solid-state battery may be used.

In the above-mentioned embodiments, an example in which the positive electrode tab 5 is connected to the first terminal 8 provided on the first plate 2 on a fixed side, and the negative electrode tab 6 is connected to the second terminal 9 provided on the second plate 4 on a movable side has been described, but the present invention is not limited thereto, and the negative electrode tab 6 may be connected to the first terminal 8 and the positive electrode tab 5 may be connected to the second terminal 9.

The configurations, functions, and effects of the embodiments of the present invention configured as described above will be collectively described.

The all-solid-state batteries 100 and 200 (secondary batteries) respectively include the battery module M formed by laminating the plurality of battery cells 1 and 201 containing lithium metal or a lithium-containing alloy as the negative electrode active material in the negative electrode layer. The battery cells 1 and 201 each include the positive electrode tab 5 connected to the positive electrode current collector 11 and exposed to the outside, and the negative electrode tab 6 connected to the negative electrode current collector 12 and exposed to the outside. The positive electrode tab 5 and the negative electrode tab 6 are provided on opposite sides across the center line O in the thickness direction of the battery cell 1 or 201, and the positive electrode tab 5 and the negative electrode tab 6 of the adjacent battery cells 1 or 201 are disposed to face each other and connected to each other.

In this configuration, since the distance L between the positive electrode tab 5 and the negative electrode tab 6 of the adjacent battery cells 1 or 201 can be reduced, the change amount of the distance L between the positive electrode tab 5 and the negative electrode tab 6 can be reduced due to the expansion and contraction. Accordingly, the stress acting on the connection portion between the positive electrode tab 5 and the negative electrode tab 6 can be reduced, and thus the breakage of the connection portion between the positive electrode tab 5 and the negative electrode tab 6 of the adjacent battery cells 1 or 201 can be prevented, and the deterioration of the performance and reliability of the all-solid-state battery 100 or 200 (secondary battery) can be suppressed.

In the all-solid-state battery 100 (secondary battery), the positive electrode tab 5 and the negative electrode tab 6 are provided to protrude in the same direction in the direction perpendicular to the laminating direction of the battery cells 1.

In this configuration, since the electrical connection portions are concentrated on one surface of the all-solid-state battery 100, a layout of the bus bars 7 in the battery module M can be simplified.

In the all-solid-state battery 200 (secondary battery), the positive electrode tab 5 and the negative electrode tab 6 are provided to protrude in opposite directions in the direction perpendicular to the laminating direction of the battery cells 201.

In this configuration, for example, in a case where the positive electrode tab 5 and the negative electrode tab 6 are provided at the center in the width direction of the battery cell 201, the distance between the connection portions of the positive electrode tab 5 and the negative electrode tab 6 is longer than that in a case where the positive electrode tab 5 and the negative electrode tab 6 are provided so as to protrude in the same direction in the direction orthogonal to the laminating direction of the battery cells 1. Accordingly, the insulating property can be more reliably secured.

In the all-solid-state batteries 100 and 200 (secondary batteries), the battery cells 1 and 201 are configured by laminating a plurality of laminated structures in which the laminated positive electrode current collector 11, the positive electrode layer 13, the solid electrolyte layer 14 (electrolyte layer), and the negative electrode current collector 12 are laminated. The positive electrode tab 5 and the negative electrode tab 6 are connected to the positive electrode current collector 11 and the negative electrode current collector 12 located on the outermost side in the laminating direction of the battery cell 1 or 201.

In this configuration, since the positive electrode tab 5 and the negative electrode tab 6 are located on the outermost side in the laminating direction of the battery cell 1 or 201, the distance between the positive electrode tab 5 and the negative electrode tab 6 of the adjacent battery cells 1 or 201 can be shortened.

In the all-solid-state batteries 100 and 200 (secondary batteries), the battery cells 1 and 201 are bipolar battery cells.

The all-solid-state batteries 100 and 200 (secondary batteries) further include: the first terminal 8 and the second terminal 9 electrically connected to the external device; the first plate 2 which is unmovable and to which one end of the battery module M in the laminating direction of the battery cells 1 or 201 is fixed; and the second plate 4 to which the other end of the battery module M in the laminating direction of the battery cells 1 or 201 is fixed, and which is movable in accordance with the battery cells 1 or 201 when the battery cells 1 or 201 expand and contract. The first terminal 8 is provided on the first plate 2, and is connected to, among the positive electrode tabs 5 and the negative electrode tabs 6 provided on the plurality of battery cells 1 or 201, the positive electrode tab 5 or the negative electrode tab 6 located closest to a first plate 2 side, and the second terminal 9 is provided on the second plate 4, and is connected to, among the positive electrode tabs 5 and the negative electrode tabs 6 provided on the plurality of battery cells 1 or 201, the positive electrode tab 5 or the negative electrode tab 6 located closest to the second plate 4 side.

In this configuration, when the battery cell 1 or 201 expands, a change amount of a distance between the second terminal 9 provided on the second plate 4 on the movable side and the positive electrode tab 5 or the negative electrode tab 6 that is connected to the second terminal 9 can be reduced. Accordingly, a stress acting on the connection portion between the second terminal 9 and the positive electrode tab 5 or the negative electrode tab 6 that is connected to the second terminal 9 can be reduced. Therefore, breakage of the connection portion between the second terminal 9 and the positive electrode tab 5 or the negative electrode tab 6 that is connected to the second terminal 9 can be prevented, and deterioration of the performance and reliability of the all-solid-state batteries 100 and 200 (secondary batteries) can be prevented.

Although the embodiments of the present invention have been described above, the above embodiments are merely a part of application examples of the present invention, and are not intended to limit the technical scope of the present invention to the specific configurations of the above embodiment. The above embodiments can be combined as appropriate.

In the above embodiments, an example in which the positive electrode tab 5 and the negative electrode tab 6 are configured to be connected to the positive electrode current collector 11 and the negative electrode current collector 12 located on the outermost side in the laminating direction of the battery cells 1 or 201 has been described, but the positive electrode tab 5 and the negative electrode tab 6 may be connected to the positive electrode current collector 11 and the negative electrode current collector 12 located on an inner side of the positive electrode current collector 11 and the negative electrode current collector 12 located on the outermost side.

## Claims

1. A secondary battery comprising: a battery module formed by laminating a plurality of battery cells each containing lithium metal or a lithium-containing alloy as a negative electrode active material in a negative electrode layer, wherein
each of the battery cells includes
a positive electrode tab connected to a positive electrode current collector and exposed to an outside, and
a negative electrode tab connected to a negative electrode current collector and exposed to the outside,
the positive electrode tab and the negative electrode tab are provided on opposite sides across a center line in a thickness direction of the battery cell, and
the positive electrode tab and the negative electrode tab of adjacent battery cells are disposed to face each other and connected to each other.

2. The secondary battery according to claim 1, wherein
the positive electrode tab and the negative electrode tab are provided to protrude in a same direction in a direction perpendicular to a laminating direction of the battery cells.

3. The secondary battery according to claim 1, wherein
the positive electrode tab and the negative electrode tab are provided to protrude in opposite directions in a direction perpendicular to a laminating direction of the battery cells.

4. The secondary battery according to any one of claims 1 to 3, wherein
each of the battery cells is configured by laminating a plurality of laminated structures in which the positive electrode current collector, a positive electrode layer, an electrolyte layer, the negative electrode layer, and the negative electrode current collector are laminated, and
the positive electrode tab and the negative electrode tab are connected to the positive electrode current collector and the negative electrode current collector located on an outermost side in the laminating direction of the battery cells.

5. The secondary battery according to any one of claims 1 to 3, wherein
each of the battery cells is a bipolar battery cell.

6. The secondary battery according to any one of claims 1 to 5, further comprising:
a first terminal and a second terminal electrically connected to an external device;
a first plate which is unmovable and to which one end of the battery module in the laminating direction of the battery cells is fixed; and
a second plate to which the other end of the battery module in the laminating direction of the battery cells is fixed, and which is movable in accordance with expansion and contraction of the battery cells when the battery cells expand and contract, wherein
one of the first terminal and the second terminal is provided on the first plate, and is connected to, among the positive electrode tabs and the negative electrode tabs provided in the plurality of battery cells, the positive electrode tab or the negative electrode tab located closest to a first plate side, and
the other of the first terminal and the second terminal is provided on the second plate, and is connected to, among the positive electrode tabs and the negative electrode tabs provided in the plurality of battery cells, the positive electrode tab or the negative electrode tab located closest to the first plate side.
